# EUROPÄISCHE PATENTANMELDUNG

(11) **EP 0 757 922 A2**
(43) Veröffentlichungstag der Anmeldung: **12.02.1997**
(21) Anmeldenummer: 96112717.2
(22) Anmeldetag: 07.08.1996
(51) Int. Cl.: B02C 17/16, B02C 23/18, C01B 21/068

(54) **Autogenes Mahlen von Siliziumnitrid**

(30) Priorität: 08.08.1995 DE 19528958
(71) Anmelder: HOECHST AKTIENGESELLSCHAFT, 65929 Frankfurt am Main (DE)
(72) Erfinder: Steidl, Dieter, DI., 65719 Hofheim (DE); Volker, Wolfgang, DI., 47198 Tövisvorst (DE)

(57) **Zusammenfassung**

Die Erfindung betrifft ein Verfahren zum Mahlen von Siliziumnitrid, bei dem das Siliziumnitrid in Suspension in einer Flüssigkeit vorliegt, dadurch gekennzeichnet, daß die Mahlung autogen durchgeführt wird und daß Siliziumnitrid in der Suspension einen Anteil von mindestens 30 Gew.-% hat.

Die Vorteile dieses Verfahrens sind im wesentlichen darin zu sehen, daß die Verfahrensführung einfacher und kostengünstiger wird und daß Qualität des gemahlenen Siliziumnitrids verbessert wird.

## Beschreibung

Die Erfindung betrifft ein Verfahren zum Mahlen von Siliziumnitrid, bei dem das Siliziumnitrid in Suspension in einer Flüssigkeit vorliegt.

Verfahren der genannten Art sind bekannt, beispielsweise aus der DE 42 00 085 A1 (D1) und aus der DE 42 20 014 A1 (D2).

In der D1 wird ein Verfahren zur Herstellung von sinteraktiven Si₃N₄ beschrieben, bei dem das Si₃N₄-Ausgangsmaterial durch eine Naßmahlung in wäßriger Suspension verkleinert wird. Das Verfahren wird in Behältern mit Mahlkörpern durchgeführt, beispielsweise in Rührwerkskugelmühlen oder in Ringspaltkugelmühlen mit Mahlkörpern aus Stahl oder Si₃N₄-Kugeln.

Bei dem Verfahren aus der D2 liegt das Mahlgut in Suspension in einer rückstandsfrei verdampfenden Flüssigkeit, beispielsweise einer kryogenen Flüssigkeit vor, wird aber ebenfalls in Apparaten mit Mahlkörpern durchgeführt.

Die genannten Verfahren haben die Nachteile, daß der Abrieb der Mahlkörper das Mahlprodukt verunreinigt - z.B. bei Mahlkörpern aus Stahl - und/oder das Korngrößenspektrum des Mahlproduktes nachteilig verändert. Der Verschleiß der Mahlkörper führt zudem zu erhöhten Betriebskosten.

Der Erfindung lag daher die Aufgabe zugrunde, ein Verfahren der eingangs genannten Art bereitzustellen, das ohne Mahlkörper auskommt.

Es wurde nun überraschend gefunden, daß sich Siliziumnitrid in flüssiger Suspension autogen, d.h. ohne den Einsatz von zusätzlichen Mahlkörpern, mahlen läßt, wenn es in der Suspension einen Anteil von mindestens 30 Gew.-% hat.
Die Aufgabe wird also durch ein Verfahren der eingangs genannten Art gelöst, das dadurch gekennzeichnet ist, daß die Mahlung autogen durchgeführt wird und daß das Siliziumnitrid in der Suspension einen Anteil von mindestens 30 Gew.-% hat.

Gegenstand der Erfindung ist somit ein Verfahren zum Mahlen von Siliziumnitrid, bei dem das Siliziumnitrid in Suspension in einer Flüssigkeit vorliegt, dadurch gekennzeichnet, daß die Mahlung autogen durchgeführt wird und daß das Siliziumnitrid in der Suspension einen Anteil von mindestens 30 Gew.-% hat. Vorteilhaft sind Siliziumnitridanteile von mindestens 50, bevorzugt 60 besonders bevorzugt 70 Gew.-%.

Bevorzugte Ausführungsformen des erfindungsgemäßen Verfahren ergeben sich aus den Ansprüche 2 bis 6.

Es können auch einzelne oder mehrere der in den Ansprüchen beschriebenen Einzelmerkmale jeweils für sich eigenständige erfindungsgemäße Lösungen bilden und es sind auch die Merkmale innerhalb der Anspruchskategorien beliebig kombinierbar.

Die Vorteile des erfindungsgemäßen Verfahrens sind im wesentlichen darin zu sehen, daß die Verfahrensführung einfacher und kostengünstiger wird und daß sich die Produktqualität verbessert.

Eine besondere Ausführungsform ist dadurch gekennzeichnet, daß die Suspensionsflüssigkeit eine rückstandsfrei verdampfende Flüssigkeit, vorzugsweise eine kryogene Flüssigkeit, besonders bevorzugt Stickstoff oder Sauerstoff oder Argon oder Wasserstoff oder Helium oder eine Mischung aus festen und flüssigen Kohlendioxid oder eine Mischung aus festen Kohlendioxid und flüssigem Stickstoff enthält.

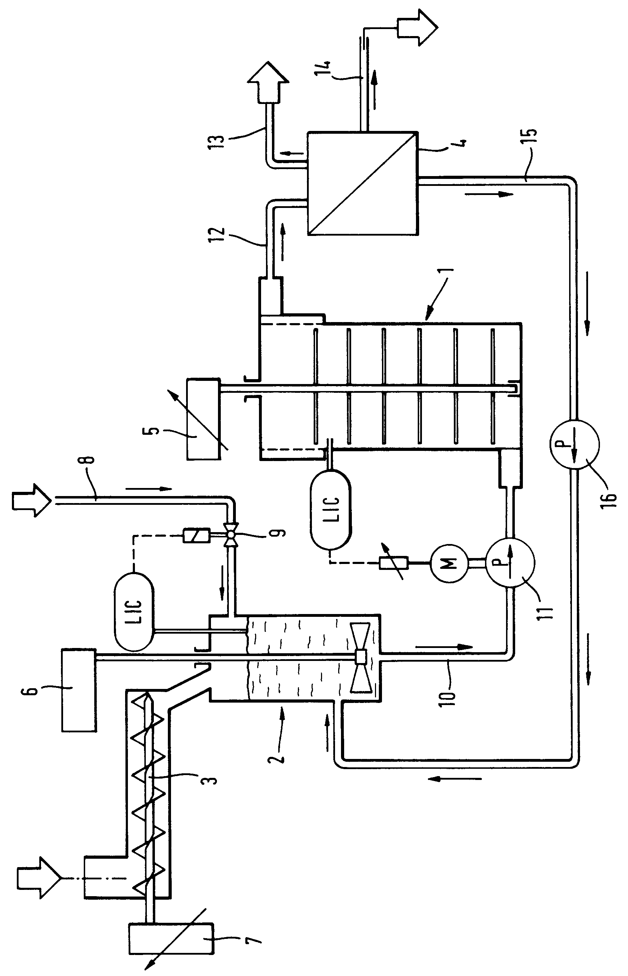

Die Zeichnung veranschaulicht ein mögliches Ausführungsbeispiel der Erfindung anhand eines Verfahrensschemas.

Dargestellt ist eine Anlage zur autogenen Mahlung von Siliziumnitrid bei der gemäß einer besonderen Ausführungsform der Erfindung flüssiger Stickstoff als Flüssigkeit zur Bildung der Suspension dient. Die Anlage besteht im wesentlichen aus der Mühle 1, dem Mischbehälter 2, der Dosierschnecke 3 und dem Filter 4. Die Mühle 1, der Mischbehälter 2 und die Dosierschnecke 3 werden durch die Motoren 5, 6 und 7 angetrieben. Die Fließrichtung der Stoffströme ist durch nicht näher gekennzeichnete Pfeile angegeben.

Das zu vermahlende Siliziumnitrid gelangt aus der Dosierschnecke 3 kontinuierlich als Aufgabegut (Edukt) in den Mischbehälter 2. Gleichzeitig gelangt durch Leitung 8 und das mit einer Niveauregelung (LIC) versehene Ventil 9 flüssiger Stickstoff in den Mischbehälter 2. Hier wird eine Suspension aus dem zu mahlenden Siliziumnitrid und dem flüssigen Stickstoff gebildet. Damit sich diese Suspension wegen der unterschiedlichen Gewichte nicht entmischt, ist eine intensive Rührung der Suspension mittels des Motors 6 im Mischbehälter 2 vorteilhaft. Die Suspension gelangt durch Leitung 10 mittels der Pumpe 11 in die Mühle 1. Die Pumpe 11 ist ebenfalls mit einer Niveauregelung (LIC) versehen. In der Mühle 1 wird das Siliziumnitrid fein gemahlen und anschließend durch die Leitung 12 in den Filter 4 geleitet. Der entstandene gasförmige Stickstoff wird dort durch Leitung 13 abgezogen, das feingemahlene stickstoffreie Produkt wird durch Leitung 14 entfernt und der verbliebene flüssige Stickstoff gelangt durch Leitung 15 und Pumpe 16 zurück in den Mischbehälter 2.

Nachfolgend werden die Verfahrensdaten einer mit flüssigem Stickstoff gemäß der Erfindung durchgeführten Vermahlung von Siliziumnitrid wiedergegeben.

| | |
|---|---|
| Mühlenvolumen [l] | 4 |
| Aufgabe Siliziumnitrid ød₅₀ [µm] | 2.37 |
| Drehzahl [min⁻¹] | 2400 |
| Feststoffgehalt [Gew.-%] | 60 |
| Durchsatz [kg/h] | 50 |
| Endprodukt ød₅₀ [µm] | 0.86 |

Bei Mahlungen mit Wasser als Suspensionsmittel in analoger Weise ergaben sich folgende Daten:

| | | | |
|---|---|---|---|
| Aufgabe Siliziumnitrid d₅₀ [µm] | 3 | 3 | 3 |
| Drehzahl [min⁻¹] | 2400 | 2400 | 2400 |
| Feststoffgehalt [Gew.-%] | 50 | 60 | 70 |
| Durchsatz [kg/h] | 50 | 50 | 50 |
| Endprodukt d₅₀ [µm] | 1.17 | 0,86 | 0.56 |

## Patentansprüche

1. Verfahren zum Mahlen von Siliziumnitrid, bei dem das Siliziumnitrid in Suspension in einer Flüssigkeit vorliegt, dadurch gekennzeichnet, daß die Mahlung autogen durchgeführt wird und daß das Siliziumnitrid in der Suspension einen Anteil von mindestens 30 Gew.-% hat.

2. Verfahren nach Anspruch 1, dadurch gekennzeichnet, daß die Flüssigkeit eine rückstandsfrei verdampfende Flüssigkeit ist.

3. Verfahren nach Anspruch 1, dadurch gekennzeichnet, daß die rückstandsfreie verdampfende Flüssigkeit eine kryogene Flüssigkeit, vorzugsweise Stickstoff oder Sauerstoff oder Argon oder Wasserstoff oder Helium oder eine Mischung aus festem und flüssigem Kohlendioxid oder eine Mischung aus festem Kohlendioxid und flüssigem Stickstoff, enthält.

4. Verfahren nach Anspruch 1, dadurch gekennzeichnet, daß die Mahlung in einer Rührwerksmühle durchgeführt wird.

5. Verfahren nach Anspruch 1, dadurch gekennzeichnet, daß das Siliziumnitrid als körniges Material mit einem Durchmesser d₅₀ kleiner als 10 µm eingesetzt wird.

6. Verfahren nach Anspruch 1, dadurch gekennzeichnet, daß das eingesetzte Siliziumnitrid in der Suspension einen Anteil von mindestens 50 Gew.-%, bevorzugt 60 Gew.-% und besonders bevorzugt 70 Gew.-%, %, hat.

7. Verwendung von Siliziumnitrid erhalten nach einem Verfahren gemäß Anspruch 1 zur Herstellung von Ventilen.
